# EUROPEAN PATENT SPECIFICATION

(11) **EP 3 391 652 B1**
(45) Date of publication and mention of the grant of the patent: **08.07.2020**
(21) Application number: 16820192.9
(22) Date of filing: 13.12.2016
(51) Int. Cl.: H04N 21/2343, H04N 21/442, H04N 21/6332, H04N 21/845, H04L 12/803, H04L 29/06

(54) **CONTROLLING RETRIEVAL IN ADAPTIVE STREAMING**
STEUERUNG DER WIEDERAUFFINDUNG IN ADAPTIVEM STREAMING
COMMANDE DE L'EXTRACTION DANS LA TRANSMISSION EN CONTINU ADAPTATIVE

(30) Priority: 15.12.2015 EP 15200121
(43) Date of publication of application: 24.10.2018
(73) Proprietor: Koninklijke KPN N.V., 3072 AP Rotterdam (NL); IMEC VZW, 3001 Leuven (BE); Universiteit Gent, 9000 Gent (BE)
(72) Inventor: FAMAEY, Jeroen, 2070 Zwijndrecht (BE); WISSINGH, Bastiaan, 2313 KZ Leiden (NL); VAN BRANDENBURG, Ray, 3039 JH Rotterdam (NL); VAN DEVENTER, Mattijs Oskar, 2264 DL Leidschendam (NL)
(74) Representative: Wuyts, Koenraad Maria
(86) International application number: PCT/EP2016/080773
(87) International publication number: WO 2017/102713

(56) References cited:
- EP-A1- 2 723 033
- EP-A1- 2 953 319
- WO-A1-2013/017165
- US-A1- 2013 227 106
- US-A1- 2015 026 309
- US-A1- 2015 033 306
- US-A1- 2015 088 965

## Description

### FIELD OF THE INVENTION

The invention relates to a method to control HTTP adaptive streaming, preferably Dynamic Adaptive Streaming over HTTP [DASH]. The invention further relates to a computer program product comprising instructions for causing a processor system to perform the method. The invention further relates to a controller, to a server comprising the controller and to a client device. The invention further relates to a policy data structure and a token data structure for use in HTTP adaptive streaming.

### BACKGROUND ART

Several methods for Internet-based media distribution have been proposed throughout the years. Traditionally, media such as video, audio, subtitles, etc., and combinations thereof in the form of multimedia, were streamed using dedicated User Datagram Protocol (UDP) based transport protocols, such as the Real-time Transport Protocol (RTP). However, such protocols have several issues. First, as they are UDP-based, they are prone to packet loss, causing, e.g., visual artefacts in displayed video images. Second, they require a dedicated infrastructure that is incompatible with the traditional HTTP-based infrastructure to deliver other types of web content.

To alleviate these issues, novel solutions for media distribution rely on Transmission Control Protocol (TCP) and Hypertext Transfer Protocol (HTTP) to deliver media content. TCP is a reliable protocol, removing artefacts due to packet loss, such as visual artefacts which may otherwise occur displayed video images. Moreover, the use of HTTP allows reuse of existing web server and cache infrastructure, easing integration with existing content delivery networks for HTTP-based services.

A first type of HTTP-based media distribution protocols proposed is referred to as progressive download. Here, the media file is downloaded using HTTP, and the client device starts playback as soon as a certain percentage of the file has been received. Generally, the downloaded media content is stored as a temporary file on the client device's hard disk. This is a very simple and straightforward approach, that combines the advantages of TCP and HTTP with simple file-based downloads. The bitrate of progressive download may thus be larger than the bitrate of the play-out (e.g. rendering) of the downloaded content. A disadvantage of this technique may be that a considerable amount of data may be downloaded, even if a user decides to no longer wanting to continue to consume (e.g. watch or listen) the content. In such a scenario valuable resources, both at the client device, as well as in the network (server, transmission network) have been effectively wasted. In addition, if network conditions would become worse, so that the bitrate of downloading becomes smaller than the bitrate of rendering, and when this is prolonged, such that all temporarily stored content is rendered, rendering of content may become greatly affected or even impossible.

More recently, HTTP Adaptive Streaming (HAS) was introduced. HAS is a novel video streaming technique that transfers (usually temporally) chunked video over HTTP. In literature [RFC 6983 - http://tools.ietf.org/html/rfc6983], a chunk might be referred to as a fragment (stored as part of a larger file) or a segment (stored as separate files). The chosen chunk size may vary depending on the particular implementation, but is usually between 2 (e.g., Microsoft Smooth Streaming) or 10 (e.g. Apple HTTP Live Streaming) seconds. Chunks may be available in more than one quality representation. This allows the client device to seamlessly adapt the quality of the video from one chunk request to the next, based on current network and device conditions. The location information (usually in the form of a URL) referencing a location from which a chunk can be retrieved may be stored in a manifest file, as well as identifiers identifying the individual chunks. An HTTP adaptive streaming client will typically buffer a few segments before play-out is started. Furthermore a typical implementation will attempt to maintain a certain (media) buffer size during streaming.

DASH (Dynamic Adaptive Streaming over HTTP), also referred to as MPEG DASH, is an HTTP based adaptive streaming solution standardised under the MPEG group. The MPEG DASH standard, refers to this manifest file as the Media Presentation Description (MPD). At the start of the streaming session, the client device may first request the manifest file in order to determine the set of quality representations, the representation bitrates, the chunk identifiers and their location information. Subsequently, the client device may start requesting the chunks in sequence using the HTTP GET method. The quality representation in which each chunk is requested may be determined by the client device's bitrate adaptation algorithm. The transfer of the data of one or more chunks of the media stream to the client device is henceforth referred to as 'retrieval' or 'retrieving' of chunks. The use of HAS may thus mitigate a few of the disadvantages of progressive download. As said, a typical HAS implementation only buffers a few segments before play-out is started, and usually does not started with the highest quality version. Contrary to HAS, when using progressive download, one cannot switch between versions during watching. Therefore when using progressive download, when one desires to watch the video in the highest quality, one has to start downloading this version right away. It is clear that it takes less time to retrieve video of a lower quality than of a higher quality, therefore when using HAS, as compared to using HTTP progressive download, the play-out delay (the time between requesting the content and start of the play-out) may be shortened. In addition, because during the play-out, the HAS client device attempts to continuously maintain a buffer of only a few chunks, less resources may be wasted, when the user decides to stop consuming content (or to skip some content), as compared to using progressive download.

If the play-out rate of content exceeds the rate with which content may be retrieved for a prolonged time (e.g. when network conditions are deteriorating), when using HTTP progressive download, the rendering of the video may become distorted or even stop, which leads to a bad user experience. HAS provides for a mechanism to somewhat mitigate this risk of a bad user experience by switching to a lower resolution version, which may be sufficient to maintain play-out of the video relatively free of artefacts, albeit in a lower quality version. The latter will of course negatively impact the user experience to a certain degree, but not to the extent that may happen when relying on progressive download.

US20150026309 A1, discloses systems and methods for adaptive streaming control including a network, a network device, and a plurality of media clients served by the network. The network device monitors media session conditions for a media session with a media client served by the network and enforces policy on the media session based on the media session conditions. The network device can enforce policy by determining a current estimated media quality of the media session based on the monitored media session conditions, determining a target media quality for the media session, and modifying the media session responsive to a difference between the current estimated media quality and the target media quality exceeding a threshold.

US 2013 227 106 A1 discloses a video session management capability that provides network-directed, client-assisted management of real-time mobile video sessions of video clients of mobile devices. The video session management capability is provided using a mobile device accessing a Wireless Service Provider (WSP) network and a video management server associated with the WSP network. The mobile device includes a video client and a video control engine. The video control engine collects client information at the mobile device and provides the client information to the video management server. The video management server receives the client information, obtains network information associated with the WSP network, determines video session management information, and propagates the video session management information toward the mobile device. The mobile device receives the video session management information and the video control engine uses the video session management information to manage a real-time mobile video session of the video client of the mobile device.

The scope of protection of the present invention is as defined in the appended claims. Any embodiments not falling within such scope should be construed as examples which do not describe parts of the invention.

### SUMMARY OF THE INVENTION

The inventors have recognised that although HAS already provides significant benefits over HTTP Progressive download, when it comes to minimizing the chance of a truly bad user experience, such as interruption of video, whilst also decreasing the risk of wasting valuable resources, there may still be room for further improving the overall user experience of consuming (watching) a streaming video, whilst not significantly increasing the risk of wasting resources, as compared to current HAS based content retrieval solutions. One of the insights that the invention is based upon, is that this objective may be achieved by increasing the portion of a video a user is able to watch in a high quality thereby decreasing the portion of this video a user has to watch in a lower quality, when network conditions would demand this. A further insight is that this 'shift' may be achieved by dynamically, through signalling a retrieval policy, changing the 'default' behaviour of HAS implementations (e.g. HAS client devices), in a manner that would allow them to take advantage of time periods during streaming when there exists excessive bandwidth, i.e. when content could be retrieved at a bitrate higher than the play-out (rendering) bitrate of the, preferably, highest available quality version of a video (or audio recording).

The above measures relate to HTTP adaptive streaming, preferably Dynamic Adaptive Streaming over HTTP [DASH], which typically involves a client retrieving chunks of a media stream from a server on the basis of a manifest file. Such a manifest file may comprise, amongst others, chunk identifiers identifying the chunks of the media stream which are available for retrieval, as well as their location information. It is noted that such retrieval may also be referred to as 'download' within HAS and/or DASH. However, since such download differs from conventional download, including progressive download, the present disclosure will use the term 'retrieval' when referring to the transfer of data of one or more chunks within the context of adaptive streaming. It is also noted that the above measures may be applied outside of the context of DASH, or even outside HTTP adaptive streaming, e.g., be used with other adaptive streaming techniques, e.g., non-HTTP based adaptive streaming.

The above measures involve defining a retrieval policy which is to be applied to the retrieval of one or more chunks of the media stream from a node caching or storing these chunks (e.g. a server). The retrieval policy may restrict or derestrict a retrieval bitrate associated with the retrieving of chunks by the client device from the server. For example a retrieval policy designed to derestrict a retrieval bitrate may improve the user experience during fluctuating network conditions by derestricting the retrieval bitrate during time periods of excess bandwidth. The policy may for example allow, after the risk of early user departure has past, e.g. somewhere during watching a video, to speed-up retrieval of chunks, even to rates (far) exceeding the (play-out) bitrate of the highest available quality. The thus built up buffered or cached amount of video at the client device, preferably at the highest quality available, may be consumed by the client device, during periods that not enough bandwidth is available at the network for streaming at the highest quality. Such policy thus effectively delays the moment that the HAS client device would switch to retrieving a lower quality of the video, thereby effectively prolonging the period that the user is able to watch at the highest quality level. Such policy may define a starting point for allowing such behaviour but of course also limit this behaviour to a certain period of time, or number of chunks, or in another way feasible.

Alternatively or additionally a signalled policy may be designed to restrict a retrieval bitrate. This advantageously allows reducing the waste of resources during start up and early user departure, whilst improving the user experience during fluctuating network conditions. For example, the retrieval policy data may be generated to limit the retrieval bitrate early in the adaptive streaming of a video stream to the bitrate of a quality version of the video stream, preferably not the highest available quality version, plus a small safety margin. For example, if it is (empirically) observed that during the first 5 % of the video a significant part of the users will depart early and that 90% of the users that watch more than 5% of a video, will subsequently watch the video completely, a policy may be designed that limits the maximum retrieval bitrate (calculated over a certain time period) of the client device to for example 105% of the play-out (e.g. rendering) bitrate during the first 5% of the video. Such policy may thus reduce the waste of bandwidth, processing and storage resources, used for chunks that may have been otherwise retrieved (faster than the play-out rate) but are never actually rendered due to 'early-user departure', during the first 5% of the video, of a significant part of the users.

In an embodiment of the invention, the client device is a modified 'greedy' client device. A 'greedy' client device will start requesting a chunk directly after having received a preceding chunk. A 'greedy' client device adapted according to the invention as claimed will be able to interpret and adhere to a retrieval policy, signalled to it, according to embodiments of the invention. Accordingly, when the retrieval policy defines a sufficiently large retrieval bitrate, the client device may exhibit progressive download'-like behaviour within adaptive streaming. Alternatively the greedy behaviour' may be moderated by a signalled policy. An example of a greedy client has been described in the paper titled "Towards Agile and Smooth Video Adaptation in Dynamic HTTP Streaming" by Tian et al., CoNEXT'12, December 10-13, 2012, Nice, France, with reference to a "greedy client download mode". This and other types of greedy clients may be further adapted to receive, parse and adhere to the retrieval policy in the retrieving of chunks of the media stream.

In an embodiment, the retrieval policy data may comprise at least one of:
- a bitrate parameter defining a maximum bitrate which is allowed for the retrieving of chunks by the client device, and
- a buffer parameter defining a maximum buffering time or maximum buffer size which is allowed for buffering of chunks retrieved by the client device.

The retrieval policy may take different forms, and can hence be generated in different ways. A non-limiting example is the retrieval policy may directly restrict the (average) bitrate at which the client may retrieve one or more chunks from the server to a maximum using a bitrate parameter. Another non-limiting example is setting and thereby restricting the buffering time and/or buffer size, which is to be used by the client for buffering the retrieved chunk(s), to a maximum using a buffer parameter. It will be appreciated that by derestricting or restricting a buffering time and/or buffer size, the retrieval bitrate is derestricted or restricted as well, albeit in an indirect manner.

In an embodiment, the media stream may be associated with a content timeline, the method may further comprise correlating a request for transmission of a chunk with a position on the content timeline on the basis of a chunk identifier of said chunk, and the generating the retrieval policy data may comprise defining the retrieval policy as a function of the position on the content timeline, wherein the retrieval policy is preferably generated to derestrict the retrieval bitrate as a function of an increase in the position on the content timeline. A chunk being requested by a client device may be associated with a position on the content timeline of the media content, e.g., representing media content at 25% of the content timeline. This position may be indicative of a presentation time of the client device when rendering the media stream. The position may be determined in various ways, for example on the basis of the chunk identifier of said chunk, or by the client device signalling its presentation time. By relating the retrieval policy to the position on the content timeline, an 'early departure' mechanism may be implemented, as well as similar mechanisms which change or update the retrieval policy as a function of the position on the content timeline.

In an embodiment, generating the retrieval policy data may comprise generating the retrieval policy to apply to the retrieving of only a subset of the plurality of time-consecutive chunks. The term 'subset' refers to a selection of one or more of the multiple chunks. The retrieval policy may thus be defined on a per-chunk basis, or defined for a number of chunks. For example, the retrieval policy data may identify the chunk(s), e.g., by means of chunk identifier(s), to which the retrieval policy applies. Different retrieval policies may thus be provided for different chunks.

In an embodiment, the retrieval policy may be generated differently as a function of the time of day. For example, if the retrieval policy is obtained during off-peak hours, a maximum buffer size may be set at 25% of the data size of the media content without any bandwidth limitation. If the retrieval policy is obtained during peak hours, then an additional bitrate parameter may be set at a maximum bitrate of 105%. Accordingly, the retrieval may be bandwidth limited during peak hours.

In an embodiment, the retrieval policy itself may define different retrieval parameters as a function of the time of day. For example, the retrieval policy may specify that between 18:00 and 22:00, a maximum buffer size is set at 25% of the data size of the media content and a bitrate parameter is set at a maximum bitrate of 105%, whereas at other times the latter bitrate limitation does not apply.

In an embodiment, the retrieval policy data may comprise a validity time interval, and the method may further comprise timestamping a request for transmission of a chunk by the client device, thereby obtaining a request timestamp, and verifying whether the request timestamp falls within the validity time interval. Here, the term validity time interval' may refer to a time interval during which the retrieval policy is deemed to be valid. It may thus be determined whether the retrieval policy applies to the request, or whether the request is in accordance with the retrieval policy, by comparing the request timestamp to the validity time interval of the retrieval policy data.

In an embodiment, providing the retrieval policy data to the client device may comprise using at least one of:
- a header of an HTTP response, e.g., an HTTP 200 OK response,
- as part of the manifest file,
- the Server and Network Assisted DASH [SAND] transport protocol, for example using a Parameters Enhancing Reception [PER] message,
- the Session Description Protocol [SDP] format, and
- a separate signalling mechanism.

For example, the retrieval policy data may be included in an HTTP response, such as an HTTP 200 OK response following an HTTP GET request, and in particular in the response's HTTP header. An advantage of this embodiment is that it is not needed to separately provide, e.g., via a separate signalling mechanism, the retrieval policy data to the client. It is further noted that manifest files are known per se from the field of adaptive streaming, and generally refer to data which identifies the available streams and their location information. It is noted that in MPEG DASH, a manifest file may also be referred to as the Media Presentation Description (MPD). By including the retrieval policy data in the manifest file, the retrieval policy may be provided to the client at the start of the streaming session. An advantage of this embodiment may be that that it is not needed to separately provide, e.g., via a separate signalling mechanism, the retrieval policy data to the client. Additionally or alternatively, the MPEG DASH SAND framework (draft ISO/IEC 23009-5) may be used to provide the retrieval policy data. This is a framework for Server And Network-assisted DASH, using Dash-Aware Network Elements (DANE), which may be a media (data) server or a third-party server. For example, a SAND communication channel may be used to provide the retrieval policy data. For example, a SAND PER message (Parameters Enhancing Delivery) may be used to carry the retrieval policy data. Additionally or alternatively, the retrieval policy data may be provided to the client device using the Session Description Protocol (SDP) format.

In an embodiment, the method may further comprise providing a token to the client device, wherein the client device retrieving chunks of the media stream may comprise the client device sending a request for transmission of one or more of the chunks to the server, the request comprising the token, and wherein the method may further comprise verifying, on the basis of the token, whether the request is in accordance with the retrieval policy. By providing a token to the client device and allowing the retrieval of one or more chunks of the media stream from the server on the basis of the client device providing the token to the server and the request being deemed to be in compliance with the retrieval policy on the basis of the token, it is avoided that the client device can easily disregard the retrieval policy. Effectively, the token may be provided as a safeguard that the client device may act 'dishonestly', in that the token may be generated to only allow retrieval which is in compliance with the retrieval policy.

In an embodiment, providing the token to the client device may comprise providing the token together with the retrieval policy data to the client device, preferably using at least one of the following data formats:
- the token being part of the retrieval policy data,
- the retrieval policy data being part of the token, or
- the token and the retrieval policy data both being part of a container data structure which is provided to the client device.

The container data structure may preferably be a manifest file or a header of an HTTP response, e.g., an HTTP 200 OK response. In general, the token may be provided to the client device using a same mechanism as previously described with reference to the providing of the retrieval policy data to the client device.

In an embodiment, the token may be associated with a subset of the plurality of chunks, and the verifying of the request may comprise verifying whether the request is for the transmission of one or more of the subset of said chunks. The token may be associated with a subset of the plurality of chunks, e.g., by comprising one or more chunk identifiers. The server may then verify adherence the retrieval policy on the basis of the chunk identifiers comprised in the token matching those of the chunk(s) being requested by the client device. Namely, the token may be generated to only allow retrieval which is in compliance with the retrieval policy. As such, it may be avoided that the client device can disregard the retrieval policy, i.e., act 'dishonestly'.

In an embodiment, the token may comprise a counter indicative of a number of chunks that the client device is still allowed to retrieve within a time interval, and the verifying of the request may comprise verifying whether the client device is still allowed to retrieve a further chunk within the time interval on the basis of the counter. The method may preferably further comprise updating the counter when allowing said retrieval of the further chunk of the media stream, thereby obtaining an updated token, and providing the updated token to the client device. The token may be generated to only allow retrieval which is in compliance with the retrieval policy. For example, the counter may be given a value which restricts the number of chunks to be retrieved within the time interval to match the retrieval bitrate indicated by the retrieval policy, in that adherence to the retrieval bitrate would result in the number of chunks being retrieved not exceeding the initial value of the counter. As such, it may be avoided that the client device can disregard the retrieval policy, i.e., act 'dishonestly'.

In an embodiment, the method may further comprise:
- determining if the client adheres to the retrieval policy; and
- if it has been determined that the client device does not adhere to the retrieval policy, enforcing the retrieval policy at the server.

Although the client device is expected to adhere to the retrieval policy as set out by the retrieval policy data, a client may act 'dishonestly' by purposefully not adhering to said retrieval policy, or may be unable to adhere thereto, e.g., by not being able to parse the retrieval policy data or apply the retrieval policy. It may therefore be desirable to enforce the retrieval policy at the server if it has been determined that the client device does not adhere to the retrieval policy, preferably in a manner which reduces or avoids interference with adaptive streaming techniques. For example, in an embodiment, enforcing the retrieval policy at the server may comprise at least one of:
- rejecting, or delaying responding to, requests from the client device which are received by the server before expiry of a waiting period; and
- applying a server-side bandwidth throttling.

Here, the term waiting period' may refer to a period which commences after responding to a client device's previous request. Such a waiting period may be instituted by the server for each individual client. By rejecting a client device's requests which are received within the waiting period, the retrieval of the requested data may be temporarily denied. A non-limiting example is that the server may use a HTTP 429 (Too Many Requests) response, and may appropriately set the "Retry-After" header field to notify the client when it can make another request. Delaying response may involve temporarily storing a client device's requests in a local buffer and only responding to these requests after expiry of the client's waiting period. It is noted that several of the above options may be applied by the server, e.g., consecutively or simultaneously.

In accordance with a further aspect of the invention, a transitory or non-transitory computer-readable storage medium may be provided comprising a manifest data structure. The manifest data structure may comprise information representing a manifest file. The manifest file may comprise chunk identifiers identifying chunks of a media stream. The manifest file may further comprise retrieval policy data defining a retrieval policy for derestricting or restricting a retrieval bitrate associated with a retrieval of one or more of the chunks of the media stream by a client device. The manifest file is preferably a Media Presentation Description (MPD) file and the retrieval policy data preferably comprises at least one of: a MaxBufferTime subelement and a MaxRetrievalRate subelement. The MaxBufferTime subelement may define a maximum buffering time which is allowed for buffering of chunks retrieved by the client device. The MaxRetrievalRate subelement may define a maximum bitrate which is allowed for the retrieving of chunks by the client device.

In accordance with a further aspect of the invention, a transitory or non-transitory computer-readable storage medium may be provided comprising a manifest data structure. The manifest data structure may comprise information representing a manifest file. The manifest file may comprise chunk identifiers identifying chunks of a media stream. The manifest file may further comprise token data. The token data may comprise information for allowing a client device to retrieve, as part of HTTP adaptive streaming, one or more of the chunks of the media stream from a server upon providing the token to the server. For example, the token data may comprise one or more chunk identifiers of chunks of which the retrieval is in accordance with a retrieval policy provided to the client device. Another example is that the token data may comprise a counter indicative of a number of chunks that the client device is still allowed to retrieve within a time interval to remain in accordance with the provided retrieval policy.

It will be appreciated by those skilled in the art that two or more of the above-mentioned embodiments, implementations, and/or aspects of the invention may be combined in any way deemed useful.

Modifications and variations of the computer program product, the controller, the client device and/or the server, which correspond to the described modifications and variations of the method, can be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1 illustrates the so-termed 'early user departure problem' by showing a message exchange between a server and a client device in a streaming session;
Fig. 2 shows a system to control HTTP adaptive streaming of a media stream from a server to a client device, wherein a controller is provided for generating retrieval policy data and providing the retrieval policy data to the client device;
Fig. 3 shows a method to control HTTP adaptive streaming;
Fig. 4 shows a flowchart representing an example of client device logic for complying with a retrieval policy which is communicated via a HTTP Header;
Fig. 5 illustrates token-based policy communication and enforcement by showing a message exchange between a server and a client device;
Fig. 6 shows a flowchart representing an example of server-side logic for providing a retrieval policy and handling permissions;
Fig. 7 relates a token-based policy which is counter-based, illustrating the server-side logic to serve a requested chunk or to reject the request; and
Fig. 8 shows an exemplary data processing system for use in the system to control HTTP adaptive streaming.

It should be noted that items which have the same reference numbers in different Figures, have the same structural features and the same functions, or are the same signals. Where the function and/or structure of such an item has been explained, there is no necessity for repeated explanation thereof in the detailed description.

### List of reference numerals

The following list of reference numbers is provided for facilitating the interpretation of the drawings and shall not be construed as limiting the claims.
100 system to control HTTP adaptive streaming
110 client device
112 buffer of client device
114 communication interface of client device
116 processor of client device
120 server
122 chunks of media stream
130 controller
132 processor of controller
134 communication interface of controller
140 retrieval policy data
200 method to control HTTP adaptive streaming
210 generating retrieval policy data
220 providing retrieval policy data to client device
1000 exemplary data processing system
1002 processor
1004 memory element
1006 system bus
1008 local memory
1010 bulk storage device
1012 input device
1014 output device
1016 network adapter
1018 application

### DETAILED DESCRIPTION OF EMBODIMENTS

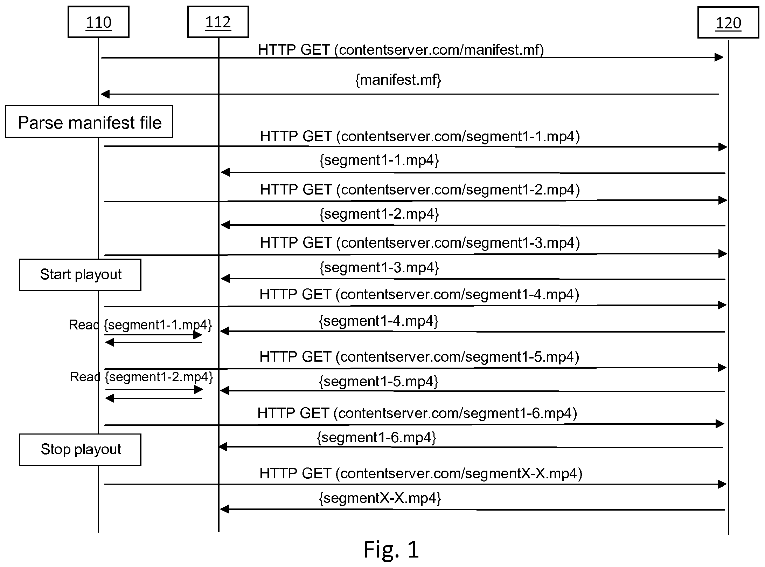

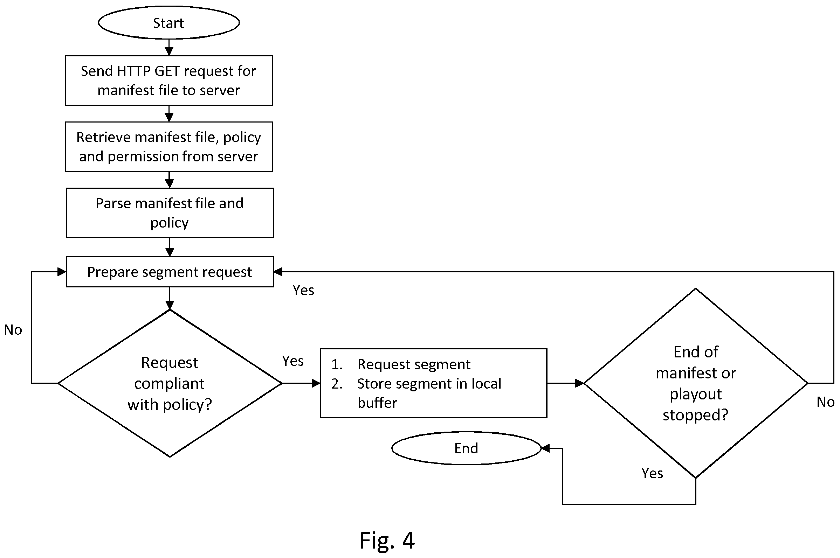

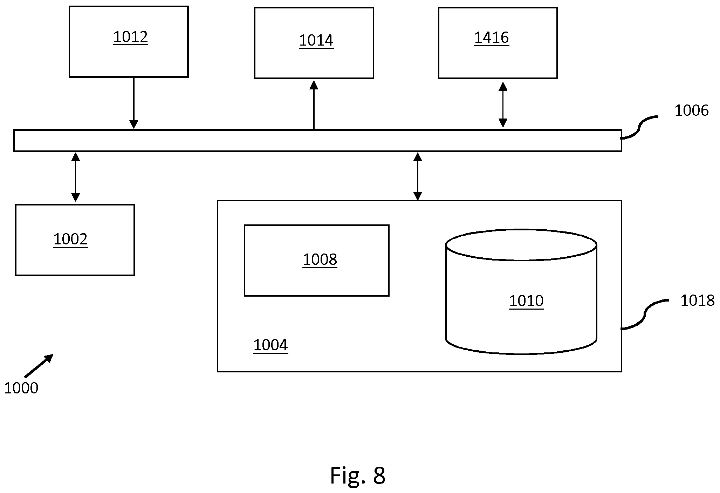

The following embodiments of the invention involve control of adaptive streaming, including, but not limited to, HTTP adaptive streaming and in particular DASH. A general explanation is provided with reference to Figs. 1-3 and 8, whereas Figs. 4-7 illustrate more specific embodiments. It is noted that none of the embodiments is to be understood as representing limitations of the invention.

Fig. 1 illustrates the so-termed 'early user departure problem' by showing a message exchange of a streaming session of a server 120 and a client device 110. For sake of illustration, the buffer 112 of the client device 110 is shown separately in Fig. 1, although the buffer 112 may be, and typically is, an internal component of the client device 110. Shown in Fig. 1 is a message exchange involving the client device 110 sending an HTTP GET of the manifest file to the server 120, and the server 120 responding by sending the manifest file to the client 110. The client 110 may then parse the manifest file, and subsequently request consecutive segments of a media stream, as identified in the manifest file, from the server 120. Having received a number of segments, the client device 110 may then start play-out by reading a first segment from the buffer 112. However, as can be seen in the example of Fig. 1, the client 110 may stop play-out of media stream after a two segments, e.g., segment1-1.mp4 and segment1-2.mp4, whereas at a time of stopping playout, already several following segments may have been retrieved from the server 120 and stored in the buffer 112 of the client device 110. Accordingly, such stopping of play-out may result in wasted bandwidth as the following segments may never be watched by the user.

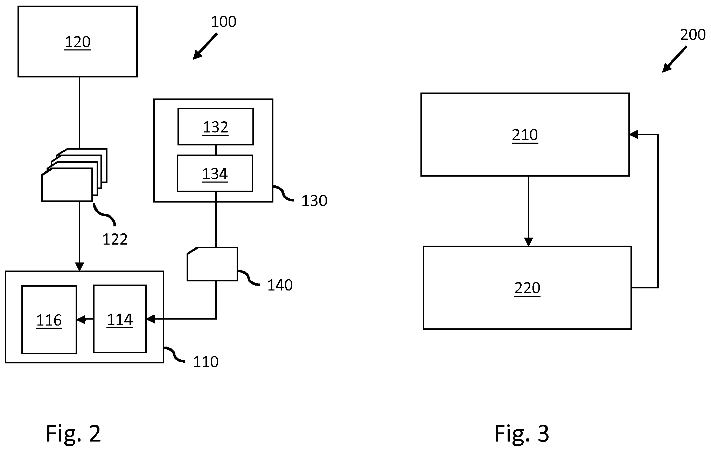

Fig. 2 shows a system 100 which comprises a client 110 and a server 120. As was the case in Fig. 1, the client 110 may retrieve chunks 122, e.g., segments or fragments, of the media stream from the server on the basis of a manifest file which has been made available, to the client device 110. To control the adaptive streaming from the server 120 to the client 110, the system 100 is shown to comprise a controller 130. The controller 130 may comprise a processor 132 configured for generating retrieval policy data 140, and a communication interface 134 configured for providing the retrieval policy data 140 to the client device 110. The client device 110 may comprise a communication interface 114 configured for receiving the retrieval policy data 140, and a processor 116 configured for parsing the retrieval policy data 140. It is noted that the buffer of the client device 120 is not shown in Fig. 2 for sake of clarity.

During operation, e.g., before start or during the adaptive streaming, the controller may generate the retrieval policy data 140 to define a retrieval policy for restricting or derestricting said retrieval by the client device 110 from the server 120. Upon receiving the retrieval policy data 140, the client device's processor 116 may then parse the retrieval policy data 140 to identify the retrieval policy, and subsequently control the retrieval from the server 120 in accordance with the retrieval policy.

Fig. 3 shows a method 200 for controlling HTTP adaptive streaming which may correspond to an operation of the controller of Fig. 2. However, this is not a limitation, in that the method 200 may also be performed by another entity or entities. The method 200 is performed within the context of, and/or may include, streaming a media stream from a server to a client device using an HTTP adaptive streaming technique, the media stream comprising a plurality of chunks, the plurality of chunks being identified by respective chunk identifiers in a manifest file, and the streaming comprising the client device retrieving chunks of the media stream from the server on the basis of the manifest file. The method 200 may further comprise, prior or during said streaming, in a step titled "GENERATING RETRIEVAL POLICY DATA", generating 210 retrieval policy data defining a retrieval policy for restricting or derestricting said retrieval of chunks by the client device from the server, and in a step titled "PROVIDING RETRIEVAL POLICY DATA TO CLIENT DEVICE", providing 220 the retrieval policy data to the client device to enable the client device to perform the retrieval in accordance with the retrieval policy, and thereby controlling the adaptive streaming. It will be appreciated that the steps of generating and providing the retrieval policy data may be performed multiple times during the adaptive streaming, as visually illustrated by an arrow forming a loop in Fig. 3 and further explained with reference to the retrieval policy being updated.

In general, the retrieval policy may take various forms. A first approach to restrict or derestrict a client's retrieval behaviour may be the specifying of a maximum allowed buffer time, e.g., by providing an appropriate buffer parameter(s) to the client device. For example, if it is desired to minimize bandwidth wastage due to early departures, the maximum buffer time of client devices that are in the first 25% of the video may be limited to a low value (e.g., 30 seconds), while allowing client devices that have passed the 25% mark (and therefore have very low chance of departing early) to have a very large client-side buffer or cache (e.g., 1/2 hour). In this case, the retrieval policy may take the form of a list of tuple, each consisting of a maximum buffer time and a chunk identifier. For example, assume the list of 2-tuples {(30s, 0); (3600s, 900)}. If a two-hour movie is assumed, consisting of 3600 chunks of 2 seconds each, this list may specify that the client device is allowed to have a 30 second buffer while it is retrieving chunks 0 to 899 (first 25% of the movie) and a 3600 second buffer from chunk 900 to 3599. It will be appreciated that, instead of defining a maximum buffering time, a maximum buffer size may be equivalently defined since each of both parameters can be directly converted to the other by way of the content bitrate.

The chuck identifier may take several forms. For example, it may be a consecutive numbering starting at zero for the first segment in the MPD, as in the above embodiment. It may also an absolute identification, for example {(30s, contentserver.com/segment1-1.mp4); (3600s, contentserver.com/segment1-900.mp4)}. The chunk identifier may be based on the template method of MPEG DASH, for example {(30s, $time$=0s); (3600s, $time$=1800s)}. The chunks may also be identified as a range, for example {(30s, 0..899); (3600s, 900..3600)}.

The retrieval policy may also take the form of the client device's maximum allowed retrieval (bit)rate. For example, as the client device progresses further into the video, the server may allow the client device to retrieve chunks of the media stream faster. This may be defined as a function f(n), where n is for example the number of chunks the client has already downloaded or the index of the last downloaded chunk. The value of f(n) may the average retrieval bitrate at which the client device may currently retrieve data. A simple example may be that the client device may be allowed to retrieve data at 1.1 times the video bitrate b as long as the client device has not retrieved the first 25% of the video, and at a bitrate of 10 times the video bitrate after that. Let us assume n represents the index of the last downloaded chunk. The function may be defined as f(n) = b x 1.1 if n < 0.25 x N (where N is the total number of chunks of the video), and f(n) = b x 10 otherwise. As the retrieval function may be a piecewise function that associates chunk identifier intervals with download bitrates, it may also be represented as a list of 2-tuples (similarly to the maximum buffer time policy). Each 2-tuple may consist of a rate (e.g., represented as a fraction of the average chunk bitrate), and a chunk identifier. For the example above, assuming again a set of 3600 chunk of 2 seconds each, the list may take the following form: {(1.1, 0); (10, 900)}. This means that the client device may download the first 900 chunks at an average retrieval bitrate of 1.1 times the average bitrate of the selected quality representation, and 10 times the average bitrate for chunks 900 up to 3599. A client device typically limits its average retrieval bitrate by spacing out its chunk requests over time. In an embodiment, the client device may limit its average retrieval bitrate by using TCP flow control.

It will be appreciated that retrieval policy data may comprise, but is not limited to, the abovementioned parameters and lists. Namely, the retrieval policy data may also comprise other types of parameters, or be formatted in another manner. Moreover, the retrieval policy data may be communicated to the client device at a start of a streaming session. Alternatively, the controller may provide the retrieval policy data during the adaptive streaming, e.g., once or repeatedly. In particular, updates may be sent, e.g., when a different restriction or de-restriction of the retrieval is desired.

In general, the retrieval policy may be generated as a function of the playout time of the media stream by the client device, for example as indicated by a position in the media stream of a chunk previously requested by the client device. The retrieval policy may be preferably generated to derestrict the retrieval by the client device as a function of an increase in play-out time. However, also other considerations may play a role in restricting or derestricting the retrieval of chunks by the client device from the server, such as, but not limited to, currently available network bandwidth, currently available server playout capacity, a near-future estimate or prediction of available network bandwidth or server playout capacity, a cost function over time of network bandwidth or server playout capacity, a location of the client device (physical or in the network), a subscription type, etc.

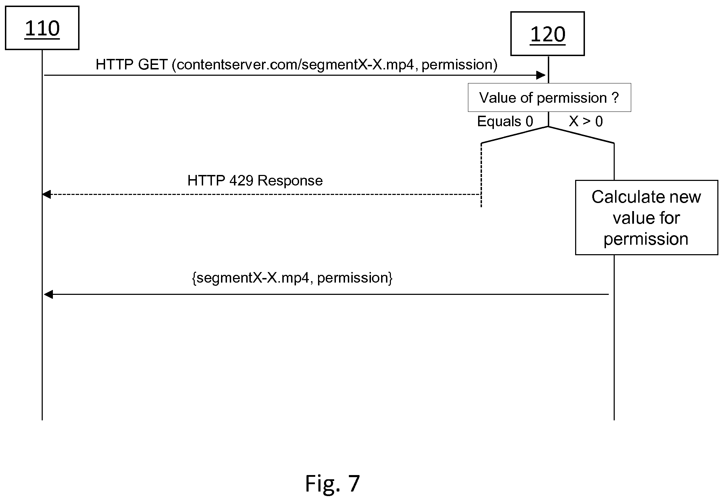

It will be appreciated that although Fig. 2 shows the controller 130 as an external entity, the controller 130 may also be part of the client device 110 or integrated into the server 120. Examples of the latter are given with reference to Figs. 4-7. In addition, an exemplary structure of the controller, client device and server will be further described with reference to the exemplary data processing system of Fig. 7.

Having generated the retrieval policy data, there are several ways of communicating the retrieval policy data to the client device. In the following, two examples are given, namely via the manifest file, or via the use of HTTP headers. Here and in the following, segments are used as examples of chunks. It will be appreciated that the examples also apply to other types of chunks, e.g., fragments.

The first example involves the server communicating the retrieval policy data via the manifest file to the client device, e.g., at the start of the streaming session. This example assumes that the server has access to the retrieval policy data. For that purpose, the server may comprise the controller. The manifest file may, for example, comprise a maximum buffer time list or a retrieval function tuple list, as previously explained. For example, in MPEG DASH, two new subelements of the MPD element, MaxBufferTime and MaxDownloadRate, may be added to carry this or similar information. As an example, the XML syntax for MaxBufferSize may be as follows:

```
 <!-- MPD Type -->
 <xs:complexType name="MPDtype">
 <xs:sequence>
 ...
 <xs:element name="MaxBufferTimeList" type="MaxBufferTimeListType"
 minOccurs="0" maxOccurs="1"/>
 </xs:sequence>
 ...
 </xs:complexType>
 <!-- MaxBufferTimeList Type -->
 <xs:complexType name="MaxBufferTimeListType">
 <xs:sequence>
 <xs:element name="MaxBufferTime" minOccurs="0"
 maxOccurs="unbounded"/>
 <xs:complexType>
 <xs:attribute name="maxBufferTime" type="xs:duration"/>
 <xs:attribute name="firstSegmentld" type="xs:string"/>
 </xs:complexType>
 </xs:element>
 </xs:sequence>
 </xs:complexType>
```

And MaxRetrievalRate may be incorporated as follows (in the following XML syntax also referred to as 'MaxDownloadRate'):

```
 <!-- MPD Type -->
 <xs:complexType name="MPDtype">
 <xs:sequence>
 ...
 <xs:element name="MaxDownloadRateList"
 type="MaxDownloadRateListType" minOccurs="0" maxOccurs="1"/>
 </xs:sequence>
 ...
 </xs:complexType>
 <!-- MaxDownloadRateList Type -->
 <xs:complexType name="MaxDownloadRateListType">
 <xs:sequence>
 <xs:element name="MaxDownloadRate" minOccurs="0"
 maxOccurs="unbounded"/>
 <xs:complexType>
 <xs:attribute name="maxDownloadRateFraction" type="xs:decimal"/>
 <xs:attribute name="firstSegmentld" type="xs:string"/>
 </xs:complexType>
 </xs:element>
 </xs:sequence>
 </xs:complexType>
```

Note that in the above XML syntaxes the existing attributes and subelements of the MPD type have been omitted for brevity. The complete definition of the MPD type can be found in the MPEG DASH standard.

Another example of how the retrieval policy data may be communicated to the client device is through the use of HTTP header fields in segment responses. In case of a maximum buffer time, the server may report with each segment response the maximum buffer time associated with that segment. In case of retrieval bitrate, the server may report that directly, or by way of derived information, such as the time interval that the client device should wait before retrieving another segment. As an example, the syntax of a segment response is listed below for a maximum buffer time parameter:

```
 HTTP/1.1 200 OK
 Content-Type: video/mp4
 Max-Buffer-Size: 30s
 <binary segment data>
```

The example states that when the client devices receives this segment, it should not request a new segment until its total buffering time is less than 30 seconds. The example for the maximum download bitrate parameter is similar:

```
 HTTP/1.1 200 OK
 Content-Type: video/mp4
 Max-Download-Rate: 1.1
 <binary segment data>
```

This example states that the client device should maintain an average download bitrate, i.e., average retrieval bitrate, of 1.1 times the average presentation bitrate. The client may translate this into a waiting period before retrieving the next segment. For example, assume the client retrieved the segment carried by this response message at 10Mbps, while the average segment bitrate is 5Mbps. This means that the maximum allowed average bitrate should be approximately (5 x 1.1) Mbps = 5.5Mbps. If a 2 second segment duration is assumed, then the client device shouldn't retrieve more than 1 segment every approx. 1.82 seconds (i.e., 5Mbps x 2s / 5.5Mbps). However, the client device will have retrieved the segment in 1 second (i.e., 5Mbps x 2s / 10Mbps). This means that the client should wait 0.82 seconds before retrieving the next segment. Note that average bitrates and segment durations are used in this calculation, as this is typically readily available from the manifest file, e.g., the @bandwidth and the @duration attributes in MPEG DASH.

Fig. 4 shows a flowchart representing an example of client device logic for complying with a retrieval policy which is communicated via a manifest file. In a first step, the client device may send a HTTP GET request for a manifest file to the server. The client device may then retrieve the manifest file, retrieval policy data and permission data from the server. The client device may then parse the manifest file and the retrieval policy data, and prepare a segment request. The client device may then calculate whether the segment request is compliant with the retrieval policy. If the segment request is compliant with the retrieval policy, the client device may request the segment immediately, and upon receiving the segment store the segment in a local buffer. The client device may then continue requesting following segments in a same manner, until the end of the manifest is reached or play-out of the media stream has stopped. If a prepared segment request is not compliant with the retrieval policy, e.g., because the request would result in the maximum buffer time or the maximally allowed average retrieval bitrate being exceeded, then the client device may hold off the segment request, wait until the segment request has become compliant to the retrieval policy, and then request the segment.

It will be appreciated that communicating the retrieval policy to the client device will only have the desired effect if the client device actually adheres to the retrieval policy. In case of 'unfair' client devices, e.g., clients which purposefully not adhere to the retrieval policy, or in case of client devices that cannot correctly interpret the retrieval policy data, the retrieval policy may be enforced at the server. For example, the server may:
- reject client requests that are sent to the server before the necessary waiting period. For example, the server may send an error response to the request if the client device's waiting period, i.e., the period until it can make another segment request, has not passed. The server may or example use the HTTP 429 (Too Many Requests) response. The server may include the "Retry-After" header field to notify the client device when it can make a request which is compliant with the retrieval policy.
- throttle the retrieval bitrate of the segment response to a maximum bitrate determined by the server; and/or
- delay client requests that are sent to the server before the necessary waiting period. For example, the server may store these requests in a local buffer and only answer them when the client device's waiting period has passed.

Note that examples 2 and 3 (e.g., throttling and delaying) may be performed transparently to the client device. This means that if the client device does not correctly interprets the provided retrieval policy data, it would still have issues with its client-side bandwidth estimation. Example 1 (e.g., rejecting) does not suffer from this problem, but may cause overhead as the client device may have to send the request multiple times. Another potential drawback of the above examples of server-sided enforcement is that the server may need to keep track of the maximum retrieval bitrate, or maximum buffer time of each client device. This extra server state may limit the scalability of the architecture, which is against the basic principle of DASH.

A more desirable enforcement of retrieval policy may be the following. Here, the communication of the retrieval policy and its enforcement may be combined into one. Namely, the server may provide the client device with one or more tokens, e.g., at a (dynamic) bitrate, which then allows the client device to retrieve new segments. As such, the server may control the maximum average retrieval bitrate, while the client device may keep control over the segment retrieval process, within the bounds of this maximum average retrieval bitrate. The advantage of this approach may be that it does not impact the client-side bandwidth estimation, while it still allows the server to restrict or derestrict the retrieval bitrate of recently joined client devices, e.g., for limiting bandwidth wastage due to early departures. Moreover, in contrast to the server-based enforcement approach outlined above, it does not require any server-side state, bringing scalability on par with standard HAS approaches, as different server-side nodes (e.g. CDN delivery nodes) may handle token-based request identically. An embodiment may comprise:
- The server may provide the client device with one or more tokens based on the retrieval policy. Each token may allow the client device to retrieve one or more segments, namely as follows:
- The client device may use the provided tokens when requesting segments. It does not request the next segment as soon as the previous segment has been received, but based on the retrieval policy that has been provided.

The server may embed the retrieval policy data into a token it sends to the client device, for example in the header or payload of a segment response message or initially with the manifest file. For example, the token may be embedded in the URL, or provided as a cookie. It is noted that standard HTTP implementations typically do not enable to embed meaningful information for the client device in cookies. Therefore, when using cookies for purpose of enforcement, the retrieval policy data may need to be communicated to the client device separately, e.g., using a manifest file or an HTTP header. Alternatively, the token may be part of the retrieval policy data, or the token and the retrieval policy data may both be part of a container data structure which is provided to the client device. For each segment request of the client device to the server, the client device may then include a currently valid token with the request.

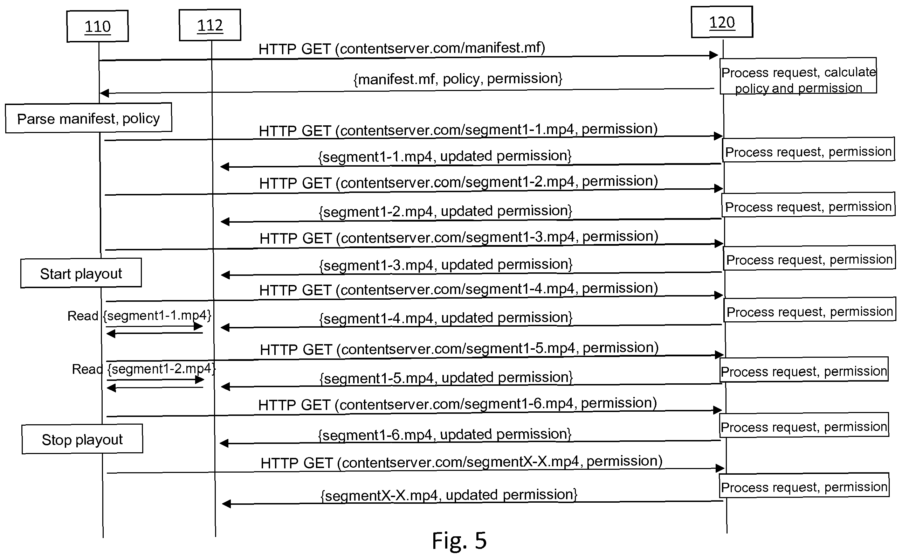

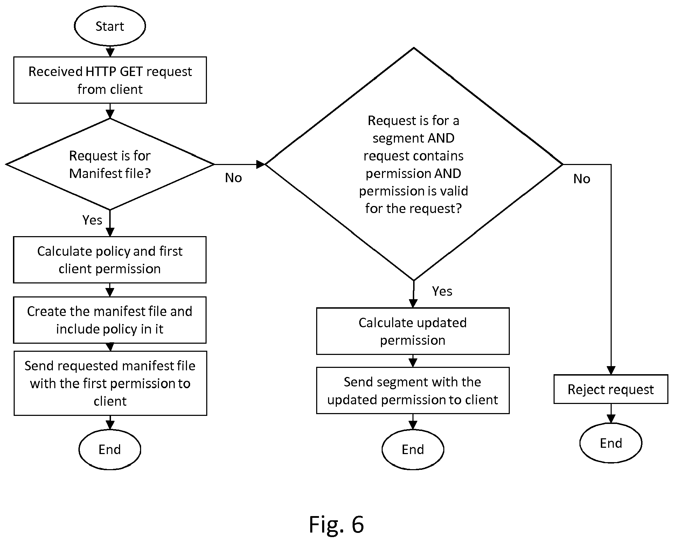

Fig. 5 illustrates token-based policy communication and enforcement by showing a message exchange between a server and a client device. Here as well as in Fig. 6, the term 'permissions' may refer to one or more tokens, representing permissions for the client device for downloading a segment in accordance with the retrieval policy. Upon receiving a request for a manifest file from a client device 110, the server 120 may process the request, calculate the retrieval policy and permissions, and provide them to the client device 110 together with the manifest file. The client device 110 may then parse the manifest file and the retrieval policy and, when requesting a segment, indicate a permission to the server 120, e.g., in the form of a currently valid token. Upon receiving the request, the server 120 may then verify the permission, e.g., by determining if the permission is valid, and only upon determining the validity of the permission and thereby the validity of the request, provide the requested segment, as well as an updated permission, to the client device 110 for storage in its buffer 112. The authenticity of the permission may be protected by a cryptographic solution known to the skilled person, e.g., by using a cryptographic signature with a key that is only known at the server side or a ditto cryptographic hash.

Fig. 6 shows a flowchart representing an example of server-side logic for providing a retrieval policy and handling permissions which relates to the operations of the server as explained with reference to Fig. 5. In Fig. 6, upon receiving a HTTP GET request from a client device, the server may determine whether the request is for a manifest file. If so, the server may calculate the retrieval policy and a first permission, e.g., in the form of a first token. The server may then create the manifest file and include the retrieval policy in the manifest file. The server may then send the manifest file to the client device together with the first permission, e.g., the first token.

If the request is not for a manifest file, the server may determine whether the request is for a segment, whether the request contains a permission, e.g., in the form of a token, and whether the permission is valid for the request. If all three of the conditions are met, e.g., yield 'Yes' as answer, the server may calculate an updated permission and send the segment to the client device together with the updated permission. If not, the server may reject the request of the client device.

There are several examples of how tokens may represent permissions for, and thereby indicate a validity of, a request. The following discusses two examples, namely counter-based tokens and segment-based tokens.

Firstly, a token may be provided as permission which comprises a counter that limits the number of segments that a client device is allowed to retrieve sequentially. However, the token may omit specifying which exact segments may be retrieved. The server may process this token upon each request from the client device. By using this mechanism, the quality estimation mechanism of the client device is not influenced and the client device may quickly fill up its initial play-out buffer.

The counter-based token may initially contain:
- a value for the number of segments that the client device is allowed to request (e.g., a counter), and optionally
- the timestamp of the previous time the allowed number of retrievable segments (e.g., a counter) has been increased, and optionally
- an initial sequence number.

Upon each request by the client device, the server may process and, if applicable, update the token. The (updated) token may then be sent back to the client device together with the requested segment. Based on the content of the token, the server may act differently. The processing of the token by the server may comprise several steps, such as deciding whether the client device is allowed to request a segment as well as giving the client device credit to retrieve additional segments. Here, the term 'credit' may refer to an increase of the counter, or a new, non-zero counter.

In order to decide whether a client device is allowed to request a segment, the server may evaluate the sequence number and the value of the counter within the token. A hash may be used to prevent the client device from tempering with the token. The server may increase the value of the sequence number upon each response from the server to the client device and may keep track of this sequence number in order prevent a client device from using an older token ("replay attack"). In order to minimize the amount of state information that needs to be kept within the server for each client device, the sequence number within the token may be set to be only valid during the HTTP session and may be reset each time the HTTP session between the client device and the server has been terminated. When the value of the counter is greater than zero, the server may decrease the counter by one (or a number corresponding to the number of segments requested), update the timestamp of the previous request within the token with the timestamp of the current request, and may then decide to send the requested segment to the client device. If however the value of the counter equals zero, the server may not decrease the counter nor send the requested segment to the client device but may reply to the client device with an HTTP response with status code "429 - Too Many Requests". This reply may optionally include a time indication how long the client device should wait before making another request, calculated based on the timestamp of the previous request. The client device should act properly on the HTTP response, as it may otherwise receive another HTTP 429 Response.

Fig. 7 illustrates the server-side logic to serve a requested segment or to reject the request. Here, the client device 110 is shown to send a HTTP GET to the server 120 containing a permission in the form of a counter-based token. The server 120 may then evaluate a value of the counter. If the counter equals zero, the server 120 may respond to the client device with an HTTP 429 Response. If the counter is larger than zero, the server 120 may calculate a new value for the permission and provide the updated permission together with the requested segment to the client device 110. It is noted that, in parallel to checking the value of the counter, the server may compare the timestamp of the previous time the counter has been increased with its current timestamp in order to calculate whether the client device should receive credits to retrieve additional segments. When the difference between those timestamps equals or is greater than a pre-configured value (e.g., three seconds, but other values may be configured), the server may increase the counter by the number of times this pre-configured value fits within the value of the difference in timestamps. In order to prevent increasing the counter with non-integer decimal values, the value of the timestamp corresponding to the increasing of the counter may be calculated or rounded towards an integer value of the counter. However, if the difference between those timestamps is less than a pre-configured value, the counter is not increased.

Alternatively or additionally to using counter-based tokens, segment-based tokens may be used, which involves providing the client device with a token to retrieve specific segments, rather than an overall counter. This may provide additional flexibility in the service offering, e.g., prevention of advertisement skipping. Specifically, the server may calculate at what time the client device may retrieve the next segment (relative to the current response) and embed this timing information into the token. Moreover, the server may add the identifier of the next segment so that the token cannot be used to request multiple segments. As such, the server may not need to keep track of any state information. As an example, a maximum bitrate function f(n) may be used to calculate the time a client device may retrieve a next segment. More specifically, when the server receives a request for segment nt at time t, the server may calculate the time at which the client device may validly send its next request using the formula B x 8 / f(nt) + t, where B is the average size of the segments in bytes.

It is noted that segment-based tokens may typically refer to a next segment, rather than an arbitrary one, and thereby may hinder backwards and forwards skipping. This may be addressed by having the server provide the client device with a new token for an arbitrary segment if the client device requests that arbitrary segment with a token associated with a different segment. For example, it may be assumed that the client device possesses a token to request segment N, but would rather like to request segment M (e.g., because the user skipped forward). When the client device requests segment M with a token for segment N, the server may refuse to serve the request, but may then respond with a token for segment M. The server may calculate the time when the client device may request segment M based on the formula above. This approach may potentially introduce some additional delay (as the retrieval time for segment N might have been earlier than the newly calculated time for N), but it allows skip forward and backward without the need for the server to keep additional state information.

It is noted that the client device may need to be able to interpret the tokens it receives from the server, e.g., in order to extract timing information. There may be different ways of allowing this. Examples include, but are not limited to:
- Standardised format: The syntax of the token may be standardised. This may require servers and client devices to adhere to this syntax. If, for example, the token contains information about the segment that can be requested, as well as at what time, the syntax may for example be a string such as "SEGMENTID_DATETIME".
- Manifest, in particularly MPD, defined format: In order to prevent having to use the exact same format on all servers, the format used by the server may be specified in the MDP. For example, a new attribute "downloadlnterval" may be added to the <MPD> tag. The following shows an example MPD with that attribute. In the example, the variables used to define the syntax of the token use the same format as other variables used in an MPEG DASH MPD (i.e., delimited by a dollar symbol "$").

```
 <MPD xmlns="urn:mpeg:DASH:schema:MPD:2011"
 mediaPresentationDuration="PT0H3M1.63S"
 minBufferTime="PT1.5S"
 profiles="urn:mpeg:dash:profile:isoff-on-demand:2011"
 type="static"
 downloadInterval="$SEGMENTID$_$DA TETIME$">
```

It will be appreciated that the formatting syntax of the token may be included in the MPD, so that client devices may interpret server-specific token syntax and use the information embedded into the tokens. This syntax may be added to the MPD XML element (cf. Section 6.5) of the MPEG DASH standard.

In general, it is noted that existing HAS bitrate adaptation algorithms may rely on the buffer filling level when deciding what quality to request. Generally, a relatively small buffer time (of around 30 seconds) is used and the bitrate adaptation algorithm switches to a lower quality when the buffer filling level goes below a certain threshold (e.g., 40% of the maximum buffer time). In the embodiments of the present disclosure, the bitrate adaptation heuristic may not rely on buffer filling level to make bitrate adaptation decisions. In case a traditional buffer-based bitrate adaptation heuristic is used, client devices that were able to retrieve large amounts of video in the past will continue to retrieve the highest quality even if the bandwidth load increases, which could lead to unfairness compared to client devices that only recently started streaming. To address this, a bitrate adaptation heuristic may be used that does not lower the quality when a certain buffer filling threshold is exceeded but instead decides upon quality based on the estimated available bandwidth and how fast the buffer grows/shrinks.

Fig. 7 is a block diagram illustrating an exemplary data processing system that may be used in the embodiments of this disclosure. Such data processing systems include data processing entities described in this disclosure, including servers, client, devices, controllers, etc. Data processing system 1000 may include at least one processor 1002 coupled to memory elements 1004 through a system bus 1006. As such, the data processing system may store program code within memory elements 1004. Further, processor 1002 may execute the program code accessed from memory elements 1004 via system bus 1006. In one aspect, data processing system may be implemented as a computer that is suitable for storing and/or executing program code. It should be appreciated, however, that data processing system 1000 may be implemented in the form of any system including a processor and memory that is capable of performing the functions described within this specification.

Memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive or other persistent data storage device. The processing system 1000 may also include one or more cache memories (not shown) that provide temporary storage of at least some program code in order to reduce the number of times program code must be retrieved from bulk storage device 1010 during execution.

Input/output (I/O) devices depicted as input device 1012 and output device 1014 optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system 1000.

As shown in Fig. 7, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail.

In one aspect, for example, data processing system 1000 may represent a client data processing system. In that case, application 1018 may represent a client application that, when executed, configures data processing system 1000 to perform the various functions described herein with reference to a "client device". Examples of client device can include, but are not limited to, televisions, monitors, projectors, media players and recorders, set-top boxes, smartphones, cameras, PCs, laptops, tablet devices, smart watches or glasses, professional video equipment, etc.

In another aspect, data processing system may represent a server. In that case, application 1018 may represent a server application that, when executed, configures data processing system 1000 to perform the various functions described herein with reference to a "server". Examples of servers can include, but are not limited to, (HTTP) streaming servers, stream buffer servers which buffer media stream(s) within a media distribution network, and recording devices which comprise audio-visual sensors and which are configured to function as streaming servers. Examples of such recording devices include smartphones, compact cameras, professional cameras, smart watches, smart glasses, etc. For example, data processing system may represent an (HTTP) server in which case application 1018, when executed, may configure data processing system to perform (HTTP) server operations.

In another aspect, data processing system may represent a controller. In that case, application 1018 may represent a controller application that, when executed, configures data processing system 1000 to perform the various functions described herein with reference to a "controller".

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method to control HTTP adaptive streaming, the method comprising:
- streaming a media stream from a server to a client device using an HTTP adaptive streaming technique, the media stream comprising a plurality of chunks and being associated with a content timeline, the plurality of chunks being identified by respective chunk identifiers in a manifest file, the manifest file being provided to the client device, and the streaming comprising the client device retrieving chunks of the media stream from the server using the chunk identifiers from the manifest file;
- correlating a request for transmission of a chunk with a position on the content timeline on the basis of a chunk identifier of said chunk;
- generating retrieval policy data defining a retrieval policy for derestricting or restricting a retrieval bitrate associated with the retrieving of chunks by the client device from the server, said generating comprising defining the retrieval policy as a function of the position on the content timeline; and
- providing the retrieval policy data to the client device to enable the client device to perform the retrieving of chunks in accordance with the retrieval policy, wherein the retrieval policy data comprises at least one of:
- a bitrate parameter defining a maximum bitrate which is allowed for the retrieving of chunks by the client device, and
- a buffer parameter defining a maximum buffering time or maximum buffer size which is allowed for buffering of chunks retrieved by the client device.

2. The method according to claim 1, wherein the retrieval policy is generated to derestrict the retrieval bitrate as a function of an increase in the position on the content timeline.

3. The method according to claims 1 or 2, wherein generating the retrieval policy data comprises generating the retrieval policy to apply to the retrieving of only a subset of the plurality of chunks.

4. The method according to any one of claims 1 to 3, wherein providing the retrieval policy data to the client device comprises using at least one of:
- a header of an HTTP response, e.g., an HTTP 200 OK response,
- as part of the manifest file,
- the Server and Network Assisted DASH [SAND] transport protocol, for example using a Parameters Enhancing Reception [PER] message,
- the Session Description Protocol [SDP] format, and
- a separate signalling mechanism.

5. The method according to any one of claims 1 to 4, further comprising providing a token to the client device, wherein the client device retrieving chunks of the media stream comprises the client device sending a request for transmission of one or more of the chunks to the server, the request comprising the token, and wherein the method further comprises verifying, on the basis of the token, whether the request is in accordance with the retrieval policy.

6. The method according to claim 5, wherein providing the token to the client device comprises providing the token together with the retrieval policy data to the client device, using at least one of the following data formats:
- the token being part of the retrieval policy data,
- the retrieval policy data being part of the token, or
- the token and the retrieval policy data both being part of a container data structure which is provided to the client device, the container data structure being preferably a manifest file or a header of an HTTP response, e.g., an HTTP 200 OK response.

7. The method according to claim 5 or 6, wherein:
- the token is associated with a subset of the plurality of chunks, and wherein the verifying of the request comprises verifying whether the request is for the transmission of one or more of the subset of said chunks; or
- the token comprises a counter indicative of a number of chunks that the client device is still allowed to retrieve within a time interval, and the verifying of the request comprises verifying whether the client device is still allowed to retrieve a further chunk within the time interval on the basis of the counter, wherein the method preferably further comprises updating the counter when allowing said retrieval of the further chunk of the media stream, thereby obtaining an updated token, and providing the updated token to the client device.

8. A transitory or non-transitory computer-readable storage medium comprising a computer program, the computer program comprising instructions for causing a processor system to perform the method according to any one of claims 1 to 7.

9. A controller configured to control adaptive streaming, the adaptive streaming comprising streaming a media stream from a server to a client device using an HTTP adaptive streaming technique, the media stream comprising a plurality of chunks, the plurality of chunks being identified by respective chunk identifiers in a manifest file, and the streaming comprising the client device retrieving chunks of the media stream from the server using the chunk identifiers from the manifest file, the media stream being associated with a content timeline, wherein the controller comprises:
- a processor configured for correlating a request for transmission of a chunk with a position on the content timeline on the basis of a chunk identifier of said chunk and for generating retrieval policy data, said generating comprising defining the retrieval policy as a function of the position on the content timeline, the retrieval policy data defining a retrieval policy for derestricting or restricting a retrieval bitrate associated with the retrieving of chunks by the client device from the server; and
- a communication interface configured for providing the retrieval policy data to the client device to enable the client device to perform the retrieving of chunks in accordance with the retrieval policy, wherein the retrieval policy data comprises at least one of:
- a bitrate parameter defining a maximum bitrate which is allowed for the retrieving of chunks by the client device, and
- a buffer parameter defining a maximum buffering time or maximum buffer size which is allowed for buffering of chunks retrieved by the client device.

10. A server configured to stream a media stream to a client device using an HTTP adaptive streaming technique, the server comprising the controller of claim 9.

11. A client device configured to receive a media stream from a server using an HTTP adaptive streaming technique, the media stream comprising a plurality of chunks and being associated with a content timeline, the plurality of chunks being identified by respective chunk identifiers in a manifest file, and wherein the client device is configured for retrieving chunks of the media stream from the server using the chunk identifiers, wherein the client device comprises:
- a communication interface configured for receiving retrieval policy data, the retrieval policy data defining a retrieval policy for derestricting or restricting a retrieval bitrate associated with the retrieving of chunks by the client device from the server, said retrieval policy being defined as a function of a position on the content timeline, wherein the position on the content time line is correlated with a request by said client device, for transmission of a chunk on the basis of a chunk identifier of said chunk; and
- a processor configured for parsing the retrieval policy data to identify the retrieval policy, and configured for controlling the retrieving of chunks from the server in accordance with the retrieval policy, wherein the retrieval policy data comprises at least one of:
- a bitrate parameter defining a maximum bitrate which is allowed for the retrieving of chunks by the client device, and
- a buffer parameter defining a maximum buffering time or maximum buffer size which is allowed for buffering of chunks retrieved by the client device.

12. The client device according to claim 11, wherein the communication interface is further configured for:
- receiving a token representing an allowance to retrieve one or more chunks of the media stream from the server, and
- providing the token to the server when requesting the retrieval of the one or more chunks of the media stream from the server.

13. A transitory or non-transitory computer-readable storage medium comprising a manifest data structure, the manifest data structure comprising information representing a manifest file, the manifest file comprising chunk identifiers identifying chunks of a media stream, the media stream being associated with a content timeline, wherein the manifest file further comprises retrieval policy data defining a retrieval policy for derestricting or restricting a retrieval bitrate associated with a retrieval of one or more of the chunks of the media stream by a client device, said retrieval policy being defined as a function of a position on the content timeline, wherein the position on the content time line is correlated with a request by said client device, for transmission of a chunk on the basis of a chunk identifier of said chunk, wherein the retrieval policy data comprises at least one of: a MaxBufferTime subelement and a MaxRetrievalRate subelement.

## Patentansprüche

1. Verfahren zum Steuern von adaptivem HTTP-Streaming, wobei das Verfahren Folgendes umfasst:
- Streamen eines Medien-Streams von einem Server zu einer Client-Vorrichtung unter Verwendung einer Technik des adaptiven HTTP-Streamings, wobei der Medien-Stream mehrere Blöcke (Chunks) umfasst und mit einem Inhaltszeitplan assoziiert ist, wobei die mehreren Blöcke durch jeweilige Blockkennungen in einer Manifest-Datei identifiziert sind, wobei die Manifest-Datei für die Client-Vorrichtung bereitgestellt wird, und das Streamen das Abrufen von Blöcken des Medien-Streams von dem Server durch die Client-Vorrichtung unter Verwendung der Blockkennungen aus der Manifest-Datei umfasst,
- Korrelieren einer Anfrage nach Übertragung eines Blocks mit einer Position in dem Inhaltszeitplan auf Basis einer Blockkennung des Blocks,
- Erzeugen von Abrufrichtliniendaten, die eine Abrufrichtlinie zum Aufheben der Einschränkung oder Einschränken einer Abruf-Bitrate definieren, die mit dem Abrufen von Blöcken von dem Server durch die Client-Vorrichtung assoziiert ist, wobei das Erzeugen das Definieren der Abrufrichtlinie als Funktion der Position in dem Inhaltszeitplan umfasst, und
- Bereitstellen der Abrufrichtliniendaten für die Client-Vorrichtung, um die Client-Vorrichtung in die Lage zu versetzen, das Abrufen von Blöcken gemäß der Abrufrichtlinie durchzuführen, wobei die Abrufrichtliniendaten mindestens eines der Folgenden umfassen:
- einen Bitratenparameter, der eine maximale Bitrate definiert, die für das Abrufen von Blöcken durch die Client-Vorrichtung zugebilligt wird, und
- einen Zwischenspeicherparameter, der eine maximale Zwischenspeicherungszeit oder maximale Zwischenspeichergröße definiert, die zum Zwischenspeichern von Blöcken, die durch die Client-Vorrichtung abgerufen werden, zugebilligt wird.

2. Verfahren nach Anspruch 1, wobei die Abrufrichtlinie erzeugt wird, um die Einschränkung der Abruf-Bitrate als Funktion eines Anstiegs in der Position in dem Inhaltszeitplan aufzuheben.

3. Verfahren nach Anspruch 1 oder 2, wobei das Erzeugen der Abrufrichtliniendaten das Erzeugen der Abrufrichtlinie umfasst, um sie auf das Abrufen nur einer Teilmenge der mehreren Blöcke anzuwenden.

4. Verfahren nach einem der Ansprüche 1 bis 3, wobei das Bereitstellen der Abrufrichtliniendaten für die Client-Vorrichtung das Verwenden von mindestens einem der Folgenden umfasst:
- einen Header einer HTTP-Antwort, z. B: einer HTTP-200-OK-Antwort,
- als Teil der Manifest-Datei,
- das Server-and-Network-Assisted-DASH-[SAND-]Transportprotokoll, zum Beispiel unter Verwendung einer Parameters-Enhancing-Reception-[PER-]Nachricht,
- das Session-Description-Protocol- [SDP-]Format und
- ein separater Signalisierungsmechanismus.

5. Verfahren nach einem der Ansprüche 1 bis 4, ferner das Bereitstellen eines Tokens für die Client-Vorrichtung umfassend, wobei das Abrufen von Blöcken des Medien-Streams durch die Client-Vorrichtung das Senden einer Anfrage nach Übertragung eines oder mehrerer der Blöcke an den Server durch die Client-Vorrichtung umfasst, wobei die Anfrage das Token umfasst, und wobei das Verfahren ferner das Verifizieren, ob die Anfrage der Abrufrichtlinie entspricht, auf Basis des Tokens umfasst.

6. Verfahren nach Anspruch 5, wobei das Bereitstellen des Tokens für die Client-Vorrichtung das Bereitstellen des Tokens zusammen mit den Abrufrichtliniendaten für die Client-Vorrichtung unter Verwendung mindestens eines der folgenden Datenformate umfasst:
- dass das Token Teil der Abrufrichtliniendaten ist,
- dass die Abrufrichtliniendaten Teil des Tokens sind oder
- dass das Token und die Abrufrichtliniendaten beide Teil einer Container-Datenstruktur sind, die für die Client-Vorrichtung bereitgestellt wird, wobei die Container-Datenstruktur vorzugsweise eine Manifest-Datei oder ein Header einer HTTP-Antwort, z. B. einer HTTP-200-OK-Antwort, ist.

7. Verfahren nach Anspruch 5 oder 6, wobei:
- das Token mit einer Teilmenge der mehreren Blöcke assoziiert ist und wobei das Verifizieren der Anfrage das Verifizieren umfasst, ob die Anfrage für die Übertragung eines oder mehrerer der Teilmenge der Blöcke bestimmt ist, oder
- das Token einen Zähler umfasst, der eine Anzahl von Blöcken angibt, die die Client-Vorrichtung innerhalb eines Zeitintervalls noch abrufen darf, und das Verifizieren der Anfrage das Verifizieren umfasst, ob die Client-Vorrichtung auf Basis des Zählers innerhalb des Zeitintervalls noch einen weiteren Block abrufen darf, wobei das Verfahren vorzugsweise ferner das Aktualisieren des Zählers umfasst, wenn der Abruf des weiteren Blocks des Medien-Streams zugebilligt wird, wodurch ein aktualisiertes Token erzielt wird, und Bereitstellen des aktualisierten Tokens für die Client-Vorrichtung.

8. Flüchtiges oder nichtflüchtiges, computerlesbares Speichermedium, ein Computerprogramm umfassend, wobei das Computerprogramm Anweisungen umfasst, um ein Prozessorsystem zu veranlassen, das Verfahren nach einem der Ansprüche 1 bis 7 durchzuführen.

9. Steuerung, die dazu konfiguriert ist, adaptives Streamen zu steuern, wobei das adaptive Streamen das Streamen eines Medien-Streams von einem Server zu einer Client-Vorrichtung unter Verwendung einer Technik des adaptiven HTTP-Streamings umfasst, wobei der Medien-Stream mehrere Blöcke (Chunks) umfasst, wobei die mehreren Blöcke durch jeweilige Blockkennungen in einer Manifest-Datei identifiziert sind, und das Streamen das Abrufen von Blöcken des Medien-Streams von dem Server durch die Client-Vorrichtung unter Verwendung der Blockkennungen aus der Manifest-Datei umfasst, wobei der Medien-Stream mit einem Inhaltszeitplan assoziiert ist, wobei die Steuerung Folgendes umfasst:
- einen Prozessor, der konfiguriert ist zum Korrelieren einer Anfrage nach Übertragung eines Blocks mit einer Position in dem Inhaltszeitplan auf Basis einer Blockkennung des Blocks und zum Erzeugen von Abrufrichtliniendaten, wobei das Erzeugen das Definieren der Abrufrichtlinie als Funktion der Position in dem Inhaltszeitplan umfasst, wobei die Abrufrichtliniendaten eine Abrufrichtlinie zum Aufheben der Einschränkung oder Einschränken einer Abruf-Bitrate definieren, die mit dem Abrufen von Blöcken von dem Server durch die Client-Vorrichtung assoziiert ist, und
- eine Kommunikationsschnittstelle, die konfiguriert ist zum Bereitstellen der Abrufrichtliniendaten für die Client-Vorrichtung, um die Client-Vorrichtung in die Lage zu versetzen, das Abrufen von Blöcken gemäß der Abrufrichtlinie durchzuführen, wobei die Abrufrichtliniendaten mindestens eines der Folgenden umfassen:
- einen Bitratenparameter, der eine maximale Bitrate definiert, die für das Abrufen von Blöcken durch die Client-Vorrichtung zugebilligt wird, und
- einen Zwischenspeicherparameter, der eine maximale Zwischenspeicherungszeit oder maximale Zwischenspeichergröße definiert, die zum Zwischenspeichern von Blöcken, die durch die Client-Vorrichtung abgerufen werden, zugebilligt wird.

10. Server, der konfiguriert ist zum Streamen eines Medien-Streams zu einer Client-Vorrichtung unter Verwendung einer Technik des adaptiven HTTP-Streamings, wobei der Server die Steuerung nach Anspruch 9 umfasst.

11. Client-Vorrichtung, die dazu konfiguriert ist, einen Medien-Stream von einem Server unter Verwendung einer Technik des adaptiven HTTP-Streamings zu empfangen, wobei der Medien-Stream mehrere Blöcke (Chunks) umfasst und mit einem Inhaltszeitplan assoziiert ist, wobei die mehreren Blöcke durch jeweilige Blockkennungen in einer Manifest-Datei identifiziert sind, und wobei die Client-Vorrichtung zum Abrufen von Blöcken des Medien-Streams von dem Server unter Verwendung der Blockkennungen konfiguriert ist, wobei die Client-Vorrichtung Folgendes umfasst:
- eine Kommunikationsschnittstelle, die konfiguriert ist zum Abrufen von Abrufrichtliniendaten, wobei die Abrufrichtliniendaten eine Abrufrichtlinie zum Aufheben der Einschränkung oder Einschränken einer Abruf-Bitrate definieren, die mit dem Abrufen von Blöcken von dem Server durch die Client-Vorrichtung assoziiert ist, wobei die Abrufrichtlinie als Funktion einer Position in dem Inhaltszeitplan definiert ist, wobei die Position in dem Inhaltszeitplan mit einer Anfrage durch die Client-Vorrichtung nach Übertragung eines Blocks auf Basis einer Blockkennung des Blocks korreliert ist, und
- einen Prozessor, der konfiguriert ist zum Parsen der Abrufrichtliniendaten, um die Abrufrichtlinie zu identifizieren, und der konfiguriert ist zum Steuern des Abrufens von Blöcken von dem Server gemäß der Abrufrichtlinie, wobei die Abrufrichtliniendaten mindestens eines der Folgenden umfassen:
- einen Bitratenparameter, der eine maximale Bitrate definiert, die für das Abrufen von Blöcken durch die Client-Vorrichtung zugebilligt wird, und
- einen Zwischenspeicherparameter, der eine maximale Zwischenspeicherungszeit oder maximale Zwischenspeichergröße definiert, die zum Zwischenspeichern von Blöcken, die durch die Client-Vorrichtung abgerufen werden, zugebilligt wird.

12. Client-Vorrichtung nach Anspruch 11, wobei die Kommunikationsschnittstelle ferner für Folgendes konfiguriert ist:
- Empfangen eines Tokens, das eine Zubilligung zum Abrufen eines oder mehrerer Blöcke des Medien-Streams von dem Server darstellt, und
- Bereitstellen des Tokens für den Server beim Anfragen nach dem Abruf des einen oder der mehreren Blöcke des Medien-Streams von dem Server.

13. Flüchtiges oder nichtflüchtiges, computerlesbares Speichermedium, eine Manifest-Datenstruktur umfassend, wobei die Manifest-Datenstruktur Informationen umfasst, die eine Manifest-Datei darstellen, wobei die Manifest-Datei Blockkennungen umfasst, die Blöcke eines Medien-Streams identifizieren, wobei der Medien-Stream mit einem Inhaltszeitplan assoziiert ist, wobei die Manifest-Datei ferner Abrufrichtliniendaten umfasst, die eine Abrufrichtlinie zum Aufheben der Einschränkung oder Einschränken einer Abruf-Bitrate definieren, die mit einem Abruf eines oder mehrerer der Blöcke des Medien-Streams durch die Client-Vorrichtung assoziiert ist, wobei die Abrufrichtlinie als Funktion einer Position in dem Inhaltszeitplan definiert ist, wobei die Position in dem Inhaltszeitplan mit einer Anfrage durch die Client-Vorrichtung nach Übertragung eines Blocks auf Basis einer Blockkennung des Blocks korreliert ist, wobei die Abrufrichtliniendaten mindestens eines der Folgenden umfassen: ein MaxBufferTime-Teilelement und ein MaxRetrievalTime-Teilelement.

## Revendications

1. Procédé pour contrôler une diffusion en continu adaptative HTTP, le procédé comprenant les étapes suivantes :
diffuser en continu un flux multimédia d'un serveur à un dispositif client en utilisant une technique de diffusion en continu adaptative HTTP, le flux multimédia comprenant une pluralité de fragments et étant associé à une chronologie de contenu, la pluralité de fragments étant identifiée par des identifiants de fragments respectifs dans un fichier manifeste, le fichier manifeste étant fourni au dispositif client, et la diffusion en continu comprenant que le dispositif client extraie des fragments du flux multimédia depuis le serveur en utilisant les identifiants de fragments du fichier manifeste ;
corréler une demande de transmission d'un fragment à une position dans la chronologie du contenu sur la base d'un identifiant de fragment dudit fragment ;
générer des données de politique d'extraction définissant une politique d'extraction pour ne pas restreindre ou restreindre un débit binaire d'extraction associé à l'extraction de fragments par le dispositif client à partir du serveur, ladite génération comprenant de définir la politique d'extraction en fonction de la position sur la chronologie du contenu ; et
fournir les données de politique d'extraction au dispositif client pour permettre au dispositif client d'effectuer l'extraction de fragments conformément à la politique d'extraction, où les données de politique d'extraction comprennent au moins l'un des éléments suivants :
- un paramètre de débit binaire définissant un débit binaire maximum qui est autorisé pour l'extraction de fragments par le dispositif client, et
- un paramètre de tampon définissant un temps de mise en mémoire tampon maximum ou une taille de tampon maximum qui sont autorisés pour la mise en mémoire tampon des fragments extraits par le dispositif client.

2. Procédé selon la revendication 1, dans lequel la politique d'extraction est générée pour ne pas restreindre le débit binaire d'extraction en fonction d'une augmentation de la position sur la chronologie du contenu.

3. Procédé selon la revendication 1 ou la revendication 2, dans lequel la génération des données de politique d'extraction comprend la génération de la politique d'extraction à appliquer à l'extraction d'un sous-ensemble seulement de la pluralité de fragments.

4. Procédé selon l'une quelconque des revendications 1 à 3, dans lequel la fourniture des données de politique d'extraction au dispositif client comprend d'utiliser au moins l'un des éléments suivants :
- un en-tête de réponse HTTP, par exemple une réponse HTTP 200 OK,
- dans le cadre du fichier manifeste,
- le protocole de transport Server and Network Assisted DASH (SAND), par exemple en utilisant un message Parameters Enhancing Reception (PER),
- le format Session description Protocol (SDP), et
- un mécanisme de signalisation séparé.

5. Procédé selon l'une quelconque des revendications 1 à 4, comprenant en outre de fournir un jeton au dispositif client, où l'extraction de fragments du flux multimédia par le dispositif client comprend l'envoi par le dispositif client d'une demande de transmission d'un ou plusieurs des fragments au serveur, la demande comprenant le jeton, et où le procédé comprend en outre de vérifier, sur la base du jeton, si la demande est conforme à la politique d'extraction.

6. Procédé selon la revendication 5, dans lequel la fourniture du jeton au dispositif client comprend de fournir le jeton avec les données de politique d'extraction au dispositif client, en utilisant au moins l'un des formats de données suivants :
- le jeton faisant partie des données de politique d'extraction,
- les données de politique d'extraction faisant partie du jeton, ou
- le jeton et les données de politique d'extraction faisant tous deux partie d'une structure de données conteneur qui est fournie au dispositif client, la structure de données conteneur étant de préférence un fichier manifeste ou un en-tête d'une réponse HTTP, par exemple une réponse HTTP 200 OK.

7. Procédé selon la revendication 5 ou la revendication 6, dans lequel :
- le jeton est associé à un sous-ensemble de la pluralité de fragments, et dans lequel la vérification de la demande comprend de vérifier si la demande concerne, ou non, la transmission d'un ou de plusieurs fragments du sous-ensemble desdits fragments ; ou
- le jeton comprend un compteur indicatif d'un nombre de fragments que le dispositif client est encore autorisé à extraire dans un intervalle de temps, et la vérification de la demande comprend de vérifier si le dispositif client est encore autorisé à extraire un autre fragment dans l'intervalle de temps sur la base du compteur, où le procédé comprend en outre de préférence de mettre à jour le compteur lorsque l'on autorise ladite extraction du fragment supplémentaire du flux multimédia, obtenant ainsi un jeton mis à jour, et de fournir le jeton mis à jour au dispositif client.

8. Support de stockage lisible par ordinateur, transitoire ou non transitoire, comprenant un programme informatique, le programme informatique comprenant des instructions destinées à amener un système à processeur à exécuter le procédé selon l'une quelconque des revendications 1 à 7.

9. Contrôleur configuré pour contrôler une diffusion en continu adaptative, la diffusion en continu adaptative comprenant la diffusion en continu d'un flux multimédia d'un serveur à un dispositif client en utilisant une technique de diffusion en continu adaptative HTTP, le flux multimédia comprenant une pluralité de fragments, la pluralité de fragments étant identifiée par des identifiants de fragments respectifs dans un fichier manifeste, et la diffusion en continu comprenant que le dispositif client extraie des fragments du flux multimédia depuis le serveur en utilisant les identifiants de fragments du fichier manifeste, le flux multimédia étant associé à une chronologie de contenu, où le contrôleur comprend :
- un processeur configuré pour corréler une demande de transmission d'un fragment à une position dans la chronologie du contenu sur la base d'un identifiant de fragment dudit fragment, et pour générer des données de politique d'extraction, ladite génération comprenant de définir la politique d'extraction en fonction de la position sur la chronologie du contenu, les données de politique d'extraction définissant une politique d'extraction pour ne pas restreindre ou restreindre un débit binaire d'extraction associé à l'extraction de fragments par le dispositif client à partir du serveur ; et
- une interface de communication configurée pour fournir les données de politique d'extraction au dispositif client pour permettre au dispositif client d'effectuer l'extraction de fragments conformément à la politique d'extraction, où les données de politique d'extraction comprennent au moins l'un des éléments suivants :
- un paramètre de débit binaire définissant un débit binaire maximum qui est autorisé pour l'extraction de fragments par le dispositif client, et
- un paramètre de tampon définissant un temps de mise en mémoire tampon maximum ou une taille de tampon maximum qui sont autorisés pour la mise en mémoire tampon des fragments extraits par le dispositif client.

10. Serveur configuré pour diffuser en continu un flux multimédia vers un dispositif client en utilisant une technique de diffusion en continu adaptative HTTP, le serveur comprenant le contrôleur de la revendication 9.

11. Dispositif client configuré pour recevoir un flux multimédia depuis un serveur en utilisant une technique de diffusion en continu adaptative HTTP, le flux multimédia comprenant une pluralité de fragments et étant associé à une chronologie de contenu, la pluralité de fragments étant identifiée par des identifiants de fragments respectifs dans un fichier manifeste, et où le dispositif client est configuré pour extraire des fragments du flux multimédia depuis le serveur en utilisant les identifiants de fragments, où le dispositif client comprend :
- une interface de communication configurée pour recevoir des données de politique d'extraction, les données de politique d'extraction définissant une politique d'extraction pour ne pas restreindre ou restreindre un débit binaire d'extraction associé à l'extraction de fragments par le dispositif client à partir du serveur, ladite politique d'extraction étant définie en fonction d'une position sur la chronologie du contenu, où la position sur la chronologie du contenu est corrélée à une demande par ledit dispositif client, pour la transmission d'un fragment sur la base d'un identifiant de fragment dudit fragment ; et
- un processeur configuré pour analyser les données de politique d'extraction afin d'identifier la politique d'extraction, et configuré pour contrôler l'extraction de fragments depuis le serveur conformément à la politique d'extraction, où les données de politique d'extraction comprennent au moins l'un des éléments suivants :
- un paramètre de débit binaire définissant un débit binaire maximum qui est autorisé pour l'extraction de fragments par le dispositif client, et
- un paramètre de tampon définissant un temps de mise en mémoire tampon maximum ou une taille de tampon maximum qui sont autorisés pour la mise en mémoire tampon des fragments extraits par le dispositif client.

12. Dispositif client selon la revendication 11, dans lequel l'interface de communication est en outre configurée pour :
- recevoir un jeton représentant une autorisation d'extraire un ou plusieurs fragments du flux multimédia du serveur, et
- fournir le jeton au serveur lors d'une demande d'extraction des un ou plusieurs fragments du flux multimédia du serveur.

13. Support de stockage lisible par ordinateur, transitoire ou non transitoire, comprenant une structure de données manifestes, la structure de données manifestes comprenant des informations représentant un fichier manifeste, le fichier manifeste comprenant des identifiants de fragments identifiant des fragments d'un flux multimédia, le flux multimédia étant associé à une chronologie de contenu, où le fichier manifeste comprend en outre des données de politique d'extraction définissant une politique d'extraction pour ne pas restreindre ou restreindre un débit binaire d'extraction associé à une extraction d'un ou de plusieurs des fragments du flux multimédia par un dispositif client, ladite politique d'extraction étant définie en fonction d'une position sur la chronologie du contenu, où la position sur la chronologie du contenu est corrélée à une demande par ledit dispositif client, pour la transmission d'un fragment sur la base d'un identifiant de fragment dudit fragment, où les données de politique d'extraction comprennent au moins l'un des sous-éléments suivants : un sous-élément MaxBufferTime et un sous-élément MaxRetrievalRate.
